# EUROPEAN PATENT SPECIFICATION

(11) **EP 4 392 724 B1**
(45) Date of publication and mention of the grant of the patent: **18.03.2026**
(21) Application number: 22859650.8
(22) Date of filing: 24.08.2022
(51) Int. Cl.: F25D 31/00, H04B 5/00, H04L 67/12, G06Q 10/08, G06K 19/07, A47F 10/00, G07F 9/02, G06Q 10/0875, G06Q 20/20, G07G 1/00

(54) **MONITORING SYSTEM AND METHOD**
ÜBERWACHUNGSSYSTEM UND -VERFAHREN
SYSTÈME ET PROCÉDÉ DE SURVEILLANCE

(30) Priority: 24.08.2021 AU 2021221518
(43) Date of publication of application: 03.07.2024
(73) Proprietor: Kareela Investment Enterprises Pty Ltd, Mosman, NSW 2088 (AU)
(72) Inventor: D'ALOISIO, Anthony Michael, Mosman, NSW 2088 (AU); REED, David, Little Bay, NSW 2036 (AU); EVANS, Luke, Robina, Queensland 4226 (AU); WARD, Simon, Dulwich Hill, NSW 2203 (AU)
(74) Representative: Potter Clarkson
(86) International application number: PCT/AU2022/050990
(87) International publication number: WO 2023/023763

(56) References cited:
- EP-A1- 3 819 569
- WO-A1-2015/076949
- WO-A1-2020/128937
- KR-A- 20180 047 123
- US-A1- 2008 186 174
- US-A1- 2017 011 384
- US-A1- 2020 161 742
- US-A1- 2020 161 742
- US-B1- 6 204 763

## Description

### Field of the Invention

The present invention relates to a product monitoring systems and methods and, in particular, to monitoring products in enclosed environments.

The invention has been developed primarily for use in monitoring one or more products stored within a refrigerator and identifying one or more products removed over time from the refrigerator and will be described hereinafter with reference thereto. However, it will be appreciated that the invention is not limited to this particular application.

### Background of the Invention

A number of refrigerators have been developed which allow a user to scan a barcode when placing a new product therein for storage. Furthermore, such refrigerators allow for a user to scan the barcode of the product after full consumption of the product. The scanned information can then be used to place an order to replenish the consumed product.

Whilst these types of refrigerators allow products to be manually tracked they provide some disadvantages. In particular, the user must remember to scan the barcode in each of these scenarios. If the user forgets to actively scan the barcode of the product, the order is unable to be placed. As it can be quite tedious for the user to operate a scanning device of the refrigerator when a product in inserted into or removed from the refrigerator, such systems have not been widely adopted by consumers. As barcodes must be aligned with the scanning device, this process can be a time-consuming task which results in either the initial or later scanning steps being skipped by the user.

Such problems also exist with other types of storage devices such as pantries, vending machines, and storage cabinets. This also includes monitoring the location of products when being removed, for example, monitoring not only product removal from a refrigerator but the location the product is moved from. Furthermore, conventional systems having multiple antenna for RF tag detection are known to suffer from interference with other antenna and a reduction in tag read performance at range.

US 2020/161742 A1 discloses a system for monitoring products stored by a storage device, such as a cabinet or container, using RFID technology.

### Object of the Invention

It is an object of the present invention to substantially overcome or at least ameliorate one or more disadvantages of existing systems, or to provide a useful alternative.

### Summary of the Invention

According to an aspect of the invention there is provided a product monitoring system including:
at least one Near Field Communication (NFC) reader associated with a storage device; and
a control system including a processor, a memory, and a communication interface, the control system being in communication with each NFC reader, wherein the memory has stored therein executable instructions, wherein the processor is configured, without human intervention and via execution of the executable instructions, to:
   control each NFC reader to read one or more NFC labels associated with one or more products stored by the storage device;
   receive, from each NFC reader, product identification data identifying the one or more products stored by the storage device;
   compare the product identification data to inventory data, stored in the memory, to determine at least one product which has been removed from the storage device, wherein the inventory data is indicative of a most recently determined inventory of the storage device; and
   transfer, via the communication interface, order data to a server processing system to order at least one new product to replace the at least one product which had been removed from the storage device;
   wherein the control system includes a primary controller in communication with a each NFC reader, an antenna switch and at least one antenna array such that each antenna is selectively detunable;
a plurality of product locations each having an associated product sensor such that each antenna has associated a plurality of product locations therewith such that in response to a product sensor detecting insertion or removal of a product from a product location all antenna not associated with that product location are detuned or deactivated such that the associated antenna records product details from tag associated therewith whereby product identification data collectively represent the identification data which is compared by the processor to the inventory data to determine the at least one product which has been removed from the storage device.

In preferred embodiments, each NFC reader includes a plurality of antennas, wherein the plurality of antennas of each NFC reader are spaced from each other and form part of an antenna matrix.

In preferred embodiments, the antenna matrix is integrated with a rack or shelves supporting the one or more products, wherein the rack or shelves include a plurality of support members defining a plurality of storage locations, each storage location being configured to store a single product, wherein the antenna matrix is integrated with the plurality of support members.

In preferred embodiments, the plurality of support members include a plurality of substantially vertical support members and a plurality of substantially horizontal support members.

In preferred embodiments, to control the one or more NFC readers to read one or more NFC labels, the processor is configured to: sequentially control different portions of the antenna matrix to read any products located within a respective location of the storage device, wherein the memory of the control system has stored therein position data indicative of a location for each different portion of the antenna matrix; receive a plurality of product identification data portions in response to the sequential control of the different portions of the antenna matrix, wherein the plurality of product identification data portions collectively represent the identification data; and determine, using the plurality of product identification data portions and the position data, a position of each identified product stored within the storage device.

In preferred embodiments, the processor is further configured to: receive, via the communication interface, a product location request; and transfer, via a communication interface, the position of each identified product stored within the storage device.

In preferred embodiments, the processor is further configured to update the inventory data based on the identified at least one identified product removed from the storage device.

In preferred embodiments, the processor is further configured to: identify one or more new products stored in the storage device based on the comparison of the product identification data to the inventory data; and update the inventory data stored in the memory to be indicative of the one or more new products.

In preferred embodiments, the processor is further configured to periodically control the one or more NFC readers to read the one or more NFC labels associated with one or more products stored by the storage device.

In preferred embodiments, in response to determining that the at least one product has been removed from the storage device, the processor is further configured to transfer, via the communication interface, a notification indicative of the at least one product having been removed from the storage device.

In a preferred aspect there is provided a system including: the product monitoring according to the first aspect; and the storage device, wherein the storage device is a refrigerator including a door having an electrically operable lock operable in a locked state, such that the door is restricted from being opened, and an unlocked state, such the door is unrestricted from being opened; wherein the processor of the control system of the product monitoring system is further configured to: receive user identification data of a user attempting to open the door of the refrigerator; determine, using user data stored in the memory, if the user is authorised to open the lockable door; and in response to determining that the user is authorised, controlling the lock to transition from the locked state to the unlocked state such that the user is able to open the door and access the one or more products stored within the refrigerator.

In preferred embodiments, the one or more products are one or more wine bottles. Preferably, the refrigerator includes an input device to receive the user identification data from the user; and the control system receives, via the communication device, the user identification data from a mobile communication device.

In preferred embodiments, the system includes the mobile communication device having a biometric sensor, wherein the mobile communication device is configured to capture biometric data of the user via the biometric sensor, wherein the user identification data is generated by the mobile communication device based on the biometric data.

In preferred embodiments, the processor is further configured to: determine, based on the product identification data, one or more product types of the one or more products stored within the refrigerator; query temperature storage data accessible to the control system, using the product type of the one or more products stored within the refrigerator, to determine one or more desired storage temperatures of the one or more products, wherein the product storage temperature data is indicative of a plurality of desired temperatures for a plurality of product types; and control an operating temperature of the refrigerator, or a portion thereof, according to the one or more desired storage temperatures.

In preferred embodiments, the processor is further configured to: determine, based on the product identification data, one or more product types of the one or more products stored within the refrigerator; query temperature serving data accessible to the control system, using the one or more product types of the one or more products stored within the refrigerator, to determine one or more desired serving temperature of the one or more products, wherein the product serving temperature data is indicative of a plurality of desired serving temperatures for a plurality of product types; and control an operating temperature of the refrigerator, or a portion thereof, based on the one or more desired serving temperatures.

In preferred embodiments, the system includes the server processing system, wherein the server processing system includes a data repository having stored therein profile data, wherein the server processing system is configured to determine, based on the profile data and the order data, the at least one new product.

In preferred embodiments, the server processing system modifies the profile data based on the order data.

It can therefore be seen that the present invention advantageously allows for the determination of the location by reading product RF tag data where the product RF tags have no pre-defined or precise alignment, and can be placed at any desired point thereon. Neither the products nor their RF tags are required to have any specific orientation or antenna alignment.

### Brief Description of the Figures

Preferred embodiments of the invention will now be described, by way of example only, with reference to the accompanying drawings in which:
Figure 1 is a functional block diagram of an example system including a product monitoring system for monitoring products stored by a storage device.
Figure 2 is a flowchart representing an example product monitoring process performed by the product monitoring system of Figure 1.
Figure 3 is a schematic of an example system, including the product monitoring system, for identifying products stored by a storage device.
Figure 4A is a schematic of an example of a storage device provided in the form of a refrigerator including an example of the product monitoring system.
Figure 4B is a schematic of an example of a first support member of the storage device of Figure 4A.
Figure 4C is a schematic of an example of a second support member of the storage device of Figure 4A.
Figure 5 a schematic representation of a system for monitoring stored products according to a second preferred embodiment;
Figure 6 is a flow chart of the operation of the system of Fig. 5 ; and
Figure 7 is a schematic representation of a array of product according to the embodiment of Fig. 5.

### Detailed Description of Preferred Embodiments

The following modes, given by way of example only, are described in order to provide a more precise understanding of the subject matter of a preferred embodiment or embodiments. In the figures, incorporated to illustrate features of an example embodiments, like reference numerals are used to identify like parts throughout the figures.

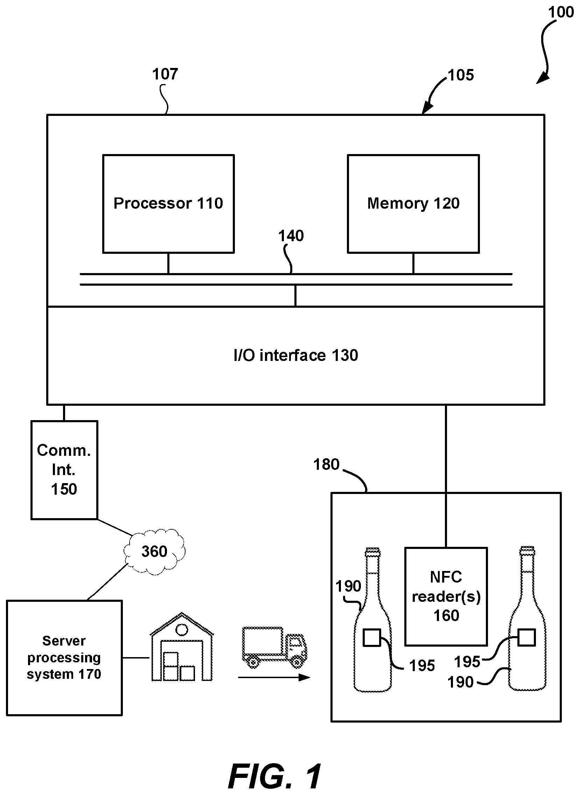

Referring to Figure 1 there is shown an example system 100 including a product monitoring system 105 including one or more Near Field Communication (NFC) readers 160 and a control system 107. The one or more NFC readers 160 are associated with a storage device 180 for storing one or more products 190. The control system 107 is in communication with the NFC readers 160. The control system 107 is a computerised control system 107 including at least one processor 110, at least one memory 120 and a communication interface 150 coupled together via a bus 140. The memory 120 has stored therein executable instructions which are executed by the processor 110 to perform a product monitoring process. The system 100 also includes a server processing system 170 which is in communication with the product monitoring system 105 via the communication interface 150. In one particular form, the server processing system 170 and the communication interface 150 of the product monitoring system 105 are in communication via one or more computer networks 360, such as a Wide Area Networks like the Internet.

Each product 190 has associated therewith an NFC label 195. For example, the NFC label 195 may be adhered to an external surface of the product 190. In a specific example, each product 190 is a bottle of wine, wherein the NFC label 195 is adhered to the external surface of the wine bottle 190. In one particular form, the storage device 180 is a refrigerator such as a wine refrigerator. In a particular embodiment, the wine refrigerator 180 can be a multi-zone wine refrigerator 180 wherein different portions or zones of the wine refrigerator 180 have different operating temperatures.

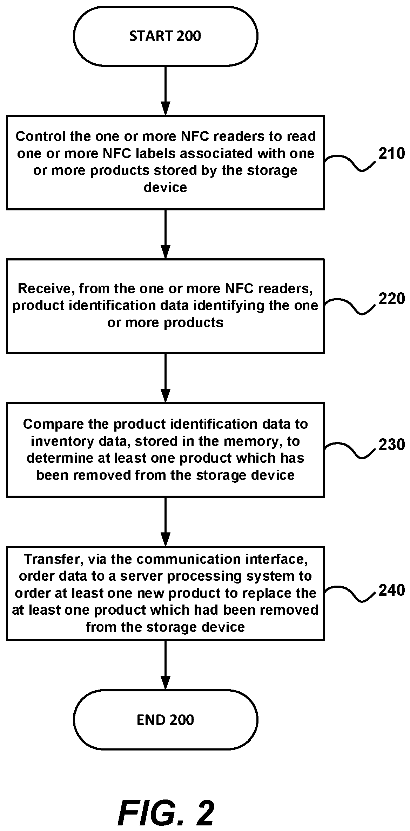

Referring to Figure 2 there is shown a flowchart representing a product monitoring process 200 performed by the product monitoring system 105 of Figure 1. In particular, at step 210 the product monitoring process 200 includes the processor 110 controlling the one or more NFC readers 160 to read one or more NFC labels 195 associated with one or more products 190 stored by the storage device 180.

At step 220, the product monitoring process 200 includes the processor 110 receiving, from the one or more NFC readers 160, product identification data identifying the one or more products 190 stored by the storage device 180.

At step 230, the product monitoring process 200 includes the processor 110 comparing the product identification data to inventory data, stored in the memory 120, to determine at least one product which has been removed from the storage device 180, wherein the inventory data is indicative of a most recently determined inventory of the storage device 180.

At step 240, the product monitoring process 200 includes transferring, via the communication interface 150, order data to a server processing system 170 to order at least one new product to replace the at least one product which had been removed from the storage device 180. The server processing system 170 can arrange dispatch of the at least one product to the location of the storage device 180,

The product monitoring process 200 is performed by the processor 110 without human intervention. This is highly advantageous as it is not necessary for a user to align a scanning device to scan a barcode of the product that has been removed from the storage device 180. Rather, the control system 107 automatically controls, without human intervention, the one or more NFC readers 160 located at one or more storage locations 182 of the storage device 180 to read identification data of each product 190 located therein. Thus, a user can remove a product 190 from the storage device 180 and the control system 107 is configured to automatically scan any products 190 remaining in the storage device 180 without the user needing to provide any input or instructions to the product monitoring system 105.

In a preferred embodiment, the product monitoring process 200 is repeatedly performed. For example, the processor 110 is configured to perform the product monitoring process 200 after a predetermined period of time (e.g. 30 seconds) has elapsed after the most recent execution of the product monitoring process 200.

The processor 110 is further configured to update the inventory data stored in the memory 120 based on the identified at least one identified product removed from the storage device 180. The processor 110 of the control system 107 may also maintain historical inventory data indicative of the changes of inventory over time.

It will be appreciated that the above process 200 can similarly operate to identify one or more new products 190 which are located within the storage device 180. Advantageously, the product monitoring process 200 performed by the product monitoring system 105 operates without human intervention such that the one or more new products are identified without human input shortly after the one or more new products 190 are located within the storage device 180. In particular, the processor 110 of the control system 107 is configured to identify one or more new products 190 stored in the storage device 180 based on the comparison of the product identification data to the inventory data, and update the inventory data stored in the memory 120 to be indicative of the one or more new products 190.

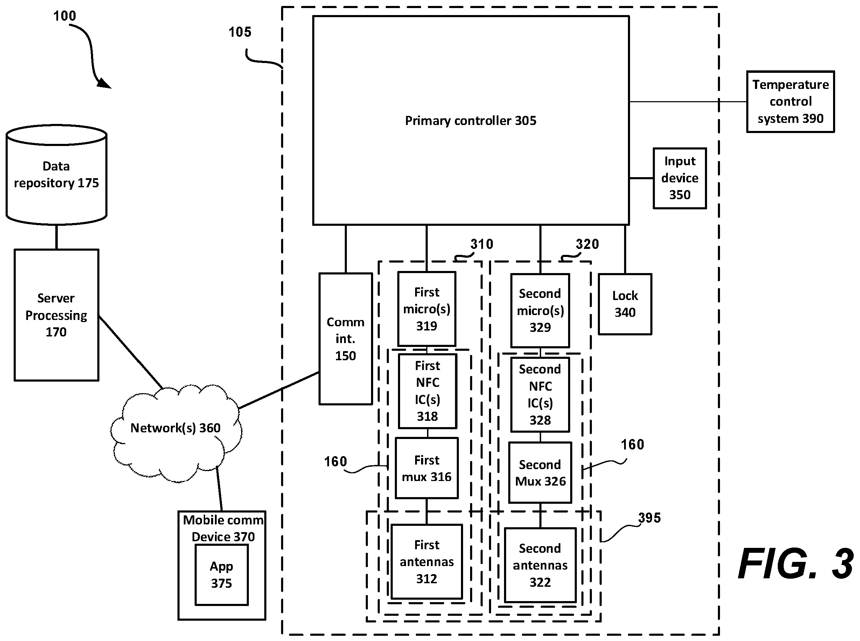

Referring to Figure 3 there is shown a more specific functional block diagram of a system 100 including a product monitoring system 105. The product monitoring system 105 includes components described in relation to Figure 1 and will not be redescribed for the purposes of clarity. However, the product monitoring system 105 includes additional components or subcomponents as will be described in more detail below.

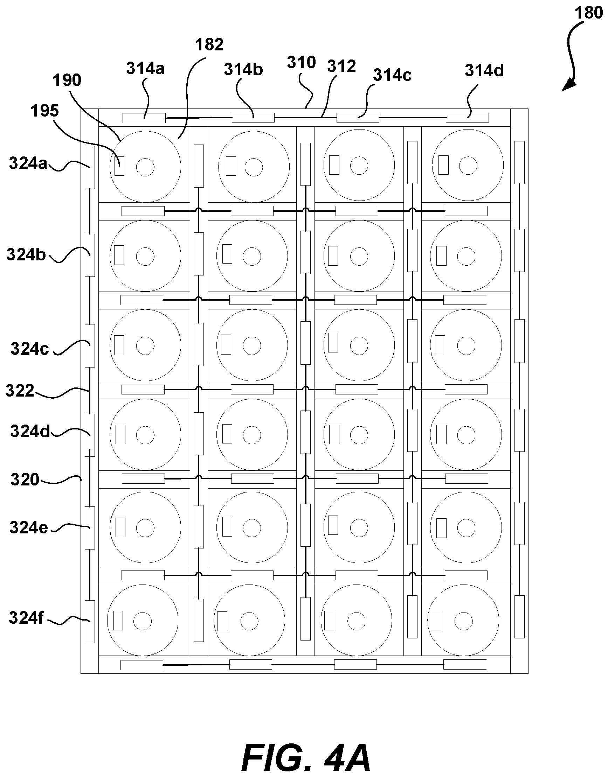

The product monitoring system 105 includes a plurality of NFC readers 160, wherein each NFC reader 160 includes a plurality of antennas 312, 322. Each NFC reader 160 includes an NFC chip 318, 328 coupled to a plurality of antennas 312, 322 spaced from each other. The plurality of antennas 312, 322 of the plurality of NFC readers 160 collectively form an antenna matrix 395. As shown in Figures 4A, 4B and 4C, the antenna matrix 395 is integrated with a rack or shelves (see Figs. 4A, 4B and 4C) located within the storage device 180 supporting the one or more products 190. The antenna matrix 395 effectively forms a three-dimensional antenna. As shown in Figures 4A, 4B and 4C, the rack or shelves include a plurality of support members 310, 320 defining the plurality of storage locations 182, wherein each storage location 182 is structured and sized to store a single product 190. The support members can have a board profile. The antenna matrix 395 is integrated with the plurality of support members of the rack or shelves. The plurality of support members include a plurality of substantially vertical support members 320 and a plurality of substantially horizontal support members 310.

Returning back to Figure 3, the control system 107 includes a primary controller 305 in communication with a plurality of first microcontrollers 319 and a plurality of second microcontrollers 329. In one example, the primary controller 305 can be provided in the form of a Raspberry Pi controller. In one example, the plurality of first microcontrollers 319 and the plurality of second microcontrollers 329 can be provided in the form of a plurality of Arduino microcontrollers. It will be appreciated that other controllers and microcontrollers can be used. Each first microcontroller 319 is in communication with a respective first multiplexor 318 which in turn is in communication with a row of antennas 314a-314d of the antenna matrix 395. Each second microcontroller 329 is in communication with a respective second multiplexor 328 which is in turn in communication with a column of antennas 324a-324f of the antenna matrix 395.

The primary controller 305 is configured to transfer a read command to each of the first and second microcontrollers 319, 329 which in turn control the respective row of antennas 314a-314d and column of antennas 324a-324d via the respective first and second multiplexors 318, 328 to read the one or more NFC labels 195 of the one or more products 190. Each first and second microcontroller 319. 329 transfers row product identification data and column product identification data to the primary controller 305, wherein the row product identification data and the column product identification data collectively represent the identification data which is compared by the processor 110 of the primary controller 305 to the inventory data stored in memory 120 of, or accessible by, the primary controller 305 to determine the at least one product 190 which has been removed from the storage device 180.

Due to each NFC reader 160 including a plurality of antennas, a significantly larger footprint can be covered with a low number of NFC chips 318, 328. In particular, the product monitoring system 105 includes more storage locations which can be individually read compared to the number of NFC chips 318, 328. For example, in Figure 4A, the refrigerator includes 24 storage locations which are readable by 10 NFC chips.

Furthermore, due to each NFC reader 160 including a plurality of antennas 314, 324, selective reading of specific product storage locations of the storage device 180 is possible. In particular, in order to selectively read the plurality of one or more NFC labels 195, the processor 110 of the control system 107 is configured to sequentially control different portions of the antenna matrix 395 to read any products located within a respective location of the storage device 180, wherein the memory 120 of the control system 107 has stored therein position data indicative of a location for each different portion of the antenna matrix 395. The processor 110 is then configured to receive a plurality of product identification data portions in response to the sequential control of the different portions of the antenna matrix 395, wherein the plurality of product identification data portions collectively represent the identification data.

The processor 110 is configured to then determine, using the plurality of product identification data portions and the position data, a position of each identified product stored within the storage device 180. In one example, the processor 110 is further configured to receive, via the communication interface 150, a product location request, and transfer, via a communication interface 150, the position of one or more products stored within the storage device 180. In one example, a user operating a mobile communication device 370 having stored in memory 120 a computer program 375 (i.e. "app") may be presented a user interface presenting a list of products stored within a refrigerator 180. The user can select one of the products from the user interface, wherein in response the mobile communication device 370 generates a product location request which is transferred to the control system 107 of the product monitoring device 105 via the communication interface 150. After determining a location of the selected product, as described above, the processor 110 of the control system 107 transfers, to the mobile communication device 370 via the communication device 150, the position of the selected product. In response, the user interface of the mobile communication device 370 can present a graphic showing the position of the selected product 190 within the refrigerator 180.

The product monitoring system 105 can also be configured to provide security functions in relation to removal of products 190 from the storage device 180. This may be particularly advantageous if a person which is not of legal age to drink alcohol removes a bottle 190 of wine from the refrigerator 180. In particular, in response to determining that the at least one product has been removed from the storage device 180, the processor 110 of the control system 107 is further configured to transfer, via the communication interface 150, a notification indicative of the at least one product having been removed from the storage device 180. The memory 120 of the control system 107 can have stored in memory 120 one or more registered mobile communication devices 370, wherein the notification can be transferred to one or more of the registered mobile communication devices 370 stored in the memory 120. The notification can be indicative of identifying data of the product which was removed.

As shown in Figure 3, the control system 107 can be in communication, via an input/output (i/o) interface of the control system 107, with an electrically operable lock 340 of the storage device 180. The refrigerator 180 includes a door having the electrically operable lock 340 operable in a locked state, such that the door is restricted from being opened, and an unlocked state, such the door is unrestricted from being opened. The processor 110 of the control system 107 of the product monitoring system 105 is configured to receive input data from a user attempting to open the door of the refrigerator 180. The processor 110 is configured to then determine, using authentication data stored in the memory 120 and the received input data, if the user is authorised to open the lockable door. In response to determining that the user is authorised, the processor 110 is configured to control the lock 340 to transition from the locked state to the unlocked state such that the user is able to open the door and access the one or more products 190 stored within the refrigerator 180.

In one example, the refrigerator 180 includes an input device 350 to receive the input data from the user. For example, the refrigerator 180 can include a keypad 350 allowing for a secret code to be input by the user to open the door. In another system, the input device may be a further NFC reader, wherein an NFC device (e.g. card) can be read by the further NFC reader to authorise the user to access the one or more products 190. In another example, the control system 107 receives, via the communication interface 150, the input data from the mobile communication device 370. In particular, the mobile communication device 370 includes a biometric sensor, wherein the mobile communication device 370 is configured to capture biometric data of the user via the biometric sensor, wherein the input data is generated by the mobile communication device 370 based on the biometric data.

As shown in Figure 3, the control system 107 can be in electrical communication, via the i/o interface 130, with a temperature control system 390 of the refrigerator. The control system 107 can be configured to electrically communicate with the temperature control system 390 to control the operating temperature of the refrigerator 180 based on a preferred storage temperature of the one or more products 190 identified as being stored within the refrigerator 180. In particular, the processor 110 of the control system 107 is configured to determine, based on the product identification data, one or more product types of the one or more products 190 stored within the refrigerator 180.

The processor 110 is configured to then query temperature storage data accessible to the control system 107, using the product type of the one or more products 190 stored within the refrigerator 180, to determine one or more desired storage temperatures of the one or more products 190, wherein the product storage temperature data is indicative of a plurality of desired temperatures for a plurality of product types. The processor 110 is configured to then control an operating temperature of the refrigerator 180, or a portion thereof, according to the one or more desired storage temperatures. It will be appreciated that the temperature storage data may be stored in the memory 120 of the control system 107 or accessible from a remote storage device via the communication interface 150.

In some instances, the one or more products 190 stored within the refrigerator may be stored at a first desired temperature but may be ideally served at a different second desired temperature. In this instance, the user can configure or request that the refrigerator 180 operates at the second desired temperature determined based on the stored one or more products in anticipation of removal of one or more products from the refrigerator. In order to achieve this change in operating temperature, the processor 110 is configured to determine, based on the product identification data, one or more product types of the one or more products 190 stored within the refrigerator 180. The processor 110 is configured to then query temperature serving data accessible to the control system 107, using the one or more product types of the one or more products stored within the refrigerator, to determine one or more desired serving temperature of the one or more products, wherein the product serving temperature data is indicative of a plurality of desired serving temperatures for a plurality of product types.

The processor 110 is configured to then control an operating temperature of the refrigerator, or a portion thereof, based on the one or more desired serving temperatures. In some instance, the processor 110 can be configured to receive, via the communication interface 150, a serving temperature command indicative that the refrigerator 180 is to transition from operating in a storage temperature mode to a serving temperature mode for a period of time. This periodic operation also operates the refrigerator in an energy efficient manner. The serving temperature command can be received from the mobile communication device 370 of a user. In another form, the memory 120 of the control system 107 can have stored therein preference data including scheduled temperature control data indicative of an operating temperature for various times.

For example, the user may set preference data using the computer program 375 operating on the mobile communication device 370 to indicate time periods (e.g. 5pm to 9pm) where the refrigerator is to maintain the operating temperature to the desired serving temperature for the one or more products stored within the refrigerator and for other times the refrigerator is to maintain the operating temperature to equal the desired storing temperature. The preference data is stored in the memory 120 of the control system 107. In this configuration, once the user sets the preference data, the user does not need to provide human intervention thereafter for the refrigerator to operate in this manner.

As shown in Figure 3, the server processing system 170 can include or can access a data repository 175 having stored therein profile data. The profile data can be a profile of one or more users of the storage device 180 which indicates one or more preferences of products stored within the storage device 180. The server processing system 170 is configured to determine, based on the profile data and the order data, the at least one new product to replace the removed product. For example, in the instance of a wine refrigerator, the profile data can indicate one or more wine preferences. In a more specific example, the order data may indicate a bottle 190 of Shiraz has been removed and the one or more preferences indicate that that a preferred wine producer. Using this information, the server processing system 170 can search a product repository 175 to identify a bottle 190 of Shiraz available from the preferred wine producer. The server processing system 170 then arranges for dispatch of the newly product to the user of the refrigerator. In some instance, the server processing system 170 can modify the profile data based on the order data. For example, over time, trends in consumption habits may indicate a change in preferences of the user of the refrigerator. The server processing system 170 can include one or more heuristics or a machine learning program stored in memory of the server processing system to analyse the order data received and modify the profile data such that more preferable replacement products are delivered to the user of the refrigerator.

Whilst certain examples have been described above in relation to a custom refrigerator having an integrated product monitoring system 105, it is possible that a portable rack or set of shelves having integrated therewith the product monitoring system 105 can be located within a normal refrigerator, thereby retrofitting the normal refrigerator with the product monitoring system 105.

Whilst examples have been described above in relation to a refrigerator for storing bottles of wine 190, it will be appreciated that the above examples can equally apply to other types of storage devices 180 such as pantries, vending machines, and storage cabinets.

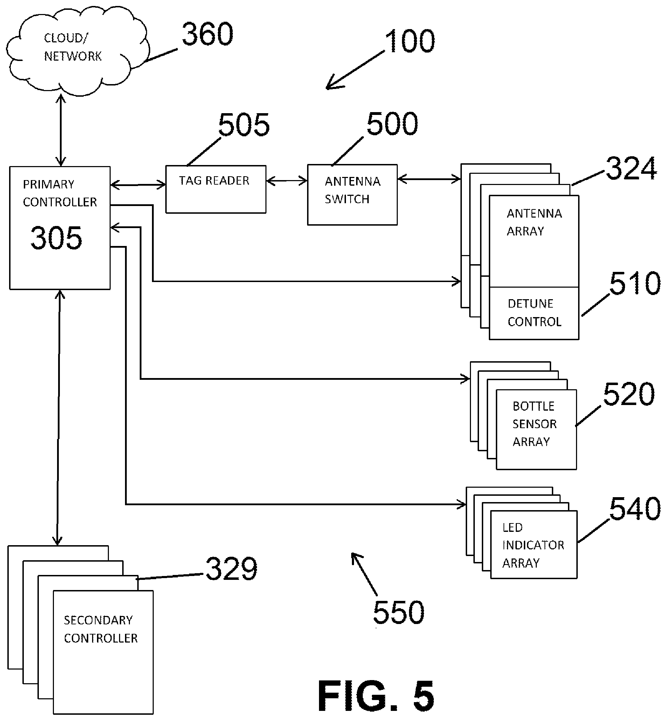

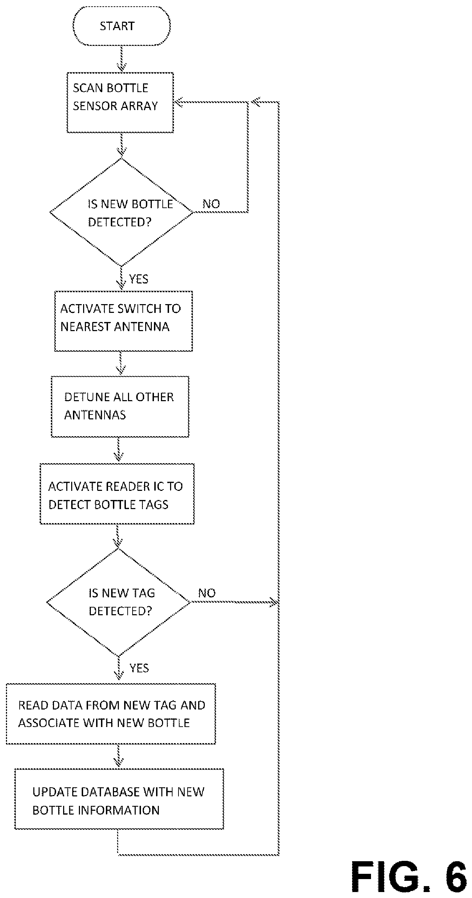

Referring to Figs 5 to 7, there is shown a system 100 of another preferred embodiment of the invention and it is noted like reference numerals have been used as above to refer to like components unless expressly denoted otherwise. In this embodiment, advantageously the number of NFC readers is minimised and also interference between the NFC readers is reduced or removed.

As best seen in Fig. 5, this embodiment includes a primary controller 305 in communication with 7 one or more secondary controllers 329. The primary controller 305 and secondary controller(s) 329 are each in communication with an array of bottle detectors 520 (labelled bottle sensor array in Fig. 5) to detect the insertion and removal of bottles from the fridge. A detector 520 is provided in each bottle location to determine the presence or absence of a bottle. Preferably, a reflective optical element such as an infra-red sensor and emitter forms each bottle detector 520, however, it will be appreciated a mechanical switch can be used, or any preferred conventional arrangement employed. Fig.5 also shows an LED indicator 540 at or adject with each bottle sensor 520 for providing a visual indication to users.

Each primary controller 305 and secondary controller 329 is in communication with each NFC tag reader 505, an antenna select switch 500 associated with each antenna 324 to select one antenna from the array of antennas 329. Each antenna 324 or array thereof can be associated with a primary controller 305 and one or more secondary controller(s) 329 as shown, however, the secondary controllers can be discarded and the primary controller 305 employed to control each antenna 324 is desired (not illustrated). Each secondary controller 329 and its associated array of bottle detectors 520 together with NFC reader 505 and associated antennas 324 form a module 550 that can detect the insertion and removal of bottles (not illustrated in Fig. 5), and read bottle tag 195 information associated with an array of 'N x M' bottles within a section of the fridge. That is, a bottle refrigerator can include one or more modules 550, with one module being comprised of a primary controller 305 and the other modules use a secondary controller 329.

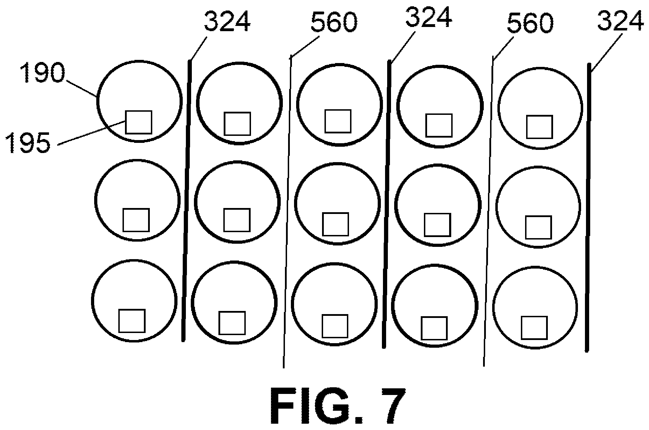

Fig. 7 schematically shows an example where a modular array 550 maybe of size 15 bottles 190. In this way fridges of various sizes may be built by connecting several modules together. For example, to make a fridge with a capacity of 45 bottles, three modules would be required.

In use, each controller 305 or 329 is constantly scanning its associated array of bottle detectors 520 to detect the insertion and removal of bottles 190. When a bottle 190 is inserted, the controller 329 determines the location of the new bottle 190 in the fridge from the active detector 520 and communicates with its associated antenna tune/detune switch 510 and connection switch 500 to connect one antenna 329 from its antenna array in module 550 to the NFC reader 505, this being the antenna that is best located to read the tag 195 of the new bottle 190. All other antennas 324 in the array are configured to be in a detuned, non-connected state so as to not interfere with the operation of the single, active antenna. The controller 305 or 329 then communicates with the NFC reader 505 to read the tag of the new bottle 190.

When a bottle 190 is removed from an array of bottles, the controller 305 or 329 associated with the array will detect the removal during its bottle scan process and determine the location of the bottle removed. Each secondary controller 329 communicates its bottle insertion and removal information to the primary controller 305. The primary controller 305 collects/stores all bottle information (both its own and that of the secondary controllers) and manages communication with the network/cloud 360.

If necessary, such as shown in Fig. 7, preferred embodiments can include a magnetic field suppressant disposed intermediate adjacent antenna arrays, for example, by means of a mu-metal sheet 560 or other extremely high magnetic permeability material to restrict the volume of space that individual antennas within an array may detect and read tags.

It will be appreciated that in this preferred embodiment that detuning all but one of the antennas within an array of antennas 324 using detune control 510 can allow the single desired antenna to perform optimally, without being affected by the nearby proximity of other antennas within the array. A single, optimally performing antenna may therefore be used to read tags from several bottles within the storage array, thereby minimising the number of antennas and associated supporting hardware required to achieve full coverage of a refrigerator. In Fig. 7, for example, each antenna 324 has 3 bottles disposed adjacent each side thereof allowing in combination with detectors 520 to ensure the correct tag 195 is read. Constantly probing or scanning the condition of detectors 520 allows removal or addition of bottles to be detected very many times each second.

It can therefore be seen that the present invention advantageously solves the technical problem where it must determine the location of product within a refrigerator, and it must read data from RF tags fixed to product, where the tag has no pre-defined or precise alignment. The tag may be fitted to any side of the product, and the refrigerator user is not required to store the product in any particular orientation, or otherwise align the tag with an antenna. As a consequence, an antenna array is required, with each antenna in the array having sufficient RF range to be able to read a tag from nearby product, irrespective of its orientation (long tag read range). The antenna array is arranged so that all of the internal space of a fridge that maybe occupied by a tag is within RF signal range of at least one antenna.

Additionally, it will be appreciated that preferred embodiments of the invention can be used in circumstances where product may be packed tightly in the refrigerator, it is not possible to have a 1:1 relationship between tag and antenna; each antenna may potentially detect and read several nearby tags from several different products at any given time. Furthermore, since the antennas that make up the array are in close proximity to each other, and since each antenna must have an RF signal range that allows for tags to be read in any orientation, there is the potential for antennas to interfere with each other and degrade their tag read range performance which is overcome by the preferred embodiments of the invention.

Many modifications will be apparent to those skilled in the art without departing from the scope of the present invention.

## Claims

1. A product monitoring system including:
at least one Near Field Communication (NFC) reader associated with a storage device; and
a control system including a processor, a memory, and a communication interface, the control system being in communication with each NFC reader, wherein the memory has stored therein executable instructions, wherein the processor is configured, without human intervention and via execution of the executable instructions, to:
control each NFC reader to read one or more NFC labels associated with one or more products stored by the storage device;
receive, from each NFC reader, product identification data identifying the one or more products stored by the storage device;
compare the product identification data to inventory data, stored in the memory, to determine at least one product which has been removed from the storage device, wherein the inventory data is indicative of a most recently determined inventory of the storage device; and
transfer, via the communication interface, order data to a server processing system to order at least one new product to replace the at least one product which had been removed from the storage device;
wherein the control system includes a primary controller in communication with a each NFC reader, an antenna switch and at least one antenna array such that each antenna is selectively detunable;
a plurality of product locations each having an associated product sensor such that each antenna has associated a plurality of product locations therewith such that in response to a product sensor detecting insertion or removal of a product from a product location all antenna not associated with that product location are detuned or deactivated such that the associated antenna records product details from tag associated therewith whereby product identification data collectively represent the identification data which is compared by the processor to the inventory data to determine the at least one product which has been removed from the storage device.

2. A product monitoring system according to claim 1 including at least one secondary controller in communication with the primary controller and being controlled thereby, each secondary controller being configured to control a plurality of antennas and bottle sensors associate therewith.

3. The product monitoring system according to claim 1 or 2, wherein an antenna matrix formed from a plurality of associated antennas, the matrix being integrated with a rack or shelves supporting the one or more products, wherein the rack or shelves include a plurality of support members defining a plurality of storage locations, each storage location being configured to store a single product, wherein the antenna matrix is integrated with the plurality of support members.

4. The product monitoring system according to claim 1, wherein the plurality of support members include a plurality of substantially vertical support members and a plurality of substantially horizontal support members.

5. The product monitoring system according to claim 4, wherein to control the one or more NFC readers to read one or more NFC product labels, the processor is configured to:
sequentially control different portions of the antenna matrix to read any products located within a respective location of the storage device, wherein the memory of the control system has stored therein position data indicative of a location for each different portion of the antenna matrix;
receive a plurality of product identification data portions in response to the sequential control of the different portions of the antenna matrix, wherein the plurality of product identification data portions collectively represent the identification data; and
determine, using the plurality of product identification data portions and the position data, a position of each identified product stored within the storage device.

6. The product monitoring system according to claim 5, wherein the processor is further configured to:
receive, via the communication interface, a product location request; and transfer,
via a communication interface, the position of each identified product stored within the storage device.

7. The product monitoring system according to any one of claims 1 to 6, wherein the processor is further configured to update the inventory data based on the identified at least one identified product removed from the storage device,
identify one or more new products stored in the storage device based on the comparison of the product identification data to the inventory data, and update the inventory data stored in the memory to be indicative of the one or more new products; or
periodically control the one or more NFC readers to read the one or more NFC labels associated with one or more products stored by the storage device.

8. The product monitoring system according to any one of claims 1 to 7, wherein in response to determining that the at least one product has been removed from the storage device, the processor is further configured to transfer, via the communication interface, a notification indicative of the at least one product having been removed from the storage device.

9. A system including:
the product monitoring according to any one of claims 1 to 8; and
the storage device, wherein the storage device is a refrigerator including a door having an electrically operable lock operable in a locked state, such that the door is restricted from being opened, and an unlocked state, such the door is unrestricted from being opened;
wherein the processor of the control system of the product monitoring system is further configured to:
receive user identification data of a user attempting to open the door of the refrigerator;
determine, using user data stored in the memory, if the user is authorised to open the lockable door; and
in response to determining that the user is authorised, controlling the lock to transition from the locked state to the unlocked state such that the user is able to open the door and access the one or more products stored within the refrigerator.

10. The system according to claim 9, wherein the one or more products are one or more wine bottles.

11. The system according to claim 9 or 10, wherein the refrigerator includes an input device to receive the user identification data from the user.

12. The system according to claim 9 or 10, wherein the control system receives, via the communication device, the user identification data from a mobile communication device, and preferably the mobile communication device has a biometric sensor, wherein the mobile communication device is configured to capture biometric data of the user via the biometric sensor, wherein the user identification data is generated by the mobile communication device based on the biometric data.

13. The system according to any one of claims 10 to 12, wherein the processor is further configured to:
determine, based on the product identification data, one or more product types of the one or more products stored within the refrigerator;
query temperature storage data accessible to the control system, using the product type of the one or more products stored within the refrigerator, to determine one or more desired storage temperatures of the one or more products, wherein the product storage temperature data is indicative of a plurality of desired temperatures for a plurality of product types; and
control an operating temperature of the refrigerator, or a portion thereof, according to the one or more desired storage temperatures.

14. The system according to any one of claims 10 to 13, wherein the processor is further configured to:
determine, based on the product identification data, one or more product types of the one or more products stored within the refrigerator;
query temperature serving data accessible to the control system, using the one or more product types of the one or more products stored within the refrigerator, to determine one or more desired serving temperature of the one or more products, wherein the product serving temperature data is indicative of a plurality of desired serving temperatures for a plurality of product types; and
control an operating temperature of the refrigerator, or a portion thereof, based on the one or more desired serving temperatures.

15. The system according to any one of claims 1 to 14, wherein the system includes the server processing system, wherein the server processing system includes a data repository having stored therein profile data, wherein the server processing system is configured to determine, based on the profile data and the order data, the at least one new product, preferably the server processing system modifies the profile data based on the order data.

## Patentansprüche

1. Produktüberwachungssystem, einschließend:
mindestens einen Leser für die Nahfeldkommunikation (NFC), der mit einer Speichervorrichtung verbunden ist; und
ein Steuersystem, das einen Prozessor, einen Speicher und eine Kommunikationsschnittstelle einschließt, wobei das Steuersystem mit jedem NFC-Leser in Verbindung steht, wobei der Speicher ausführbare Anweisungen aufweist, wobei der Prozessor konfiguriert ist, ohne menschliches Eingreifen und durch Ausführung der ausführbaren Anweisungen zum:
Steuern jedes NFC-Lesers zum Lesen eines oder mehrerer NFC-Etiketten, die mit einem oder mehreren in der Speichervorrichtung gespeicherten Produkten verbunden sind;
Empfangen von Produktidentifikationsdaten von jedem NFC-Leser, die das eine oder die mehreren Produkte identifizieren, die in der Speichervorrichtung gespeichert sind;
Vergleichen der Produktidentifikationsdaten mit Bestandsdaten, die im Speicher gespeichert sind, um mindestens ein Produkt zu bestimmen, das aus der Speichervorrichtung entnommen wurde, wobei die Bestandsdaten Angaben zu einem zuletzt bestimmten Bestand der Speichervorrichtung aufweisen; und
Übertragen von Bestelldaten über die Kommunikationsschnittstelle an ein Verarbeitungsvorrichtung des Servers, um mindestens ein neues Produkt zu bestellen, das das mindestens eine aus der Speichervorrichtung entnommene Produkt ersetzt;
wobei das Steuersystem eine primäre Steuerung einschließt, die mit jedem NFC-Leser, einem Antennenschalter und mindestens einem Antennenarray kommuniziert, sodass jede Antenne selektiv ausrichtbar ist;
eine Vielzahl von Produktstellen, denen jeweils ein Produktsensor zugeordnet ist, sodass jeder Antenne eine Vielzahl von Produktstellen zugeordnet ist, sodass als Reaktion darauf, dass ein Produktsensor das Einlegen oder Entnehmen eines Produkts von einer Produktstelle erfasst, alle Antennen, die dieser Produktstelle nicht zugeordnet sind, verstimmt oder deaktiviert werden, sodass die zugeordnete Antenne Produktdetails von einem ihr zugeordneten Etikett aufzeichnet, wobei Produktidentifikationsdaten gemeinsam die Identifikationsdaten darstellen, die vom Prozessor mit den Bestandsdaten verglichen werden, um das mindestens eine Produkt zu bestimmen, das aus der Speichervorrichtung entfernt worden ist.

2. Produktüberwachungssystem nach Anspruch 1, das mindestens eine sekundäre Steuerung einschließt, die mit der primären Steuerung in Verbindung steht und von dieser gesteuert wird, wobei jede sekundäre Steuerung konfiguriert ist, um eine Vielzahl von Antennen und damit verbundenen Flaschensensoren zu steuern.

3. Produktüberwachungssystem nach Anspruch 1 oder 2, wobei eine Antennenmatrix aus einer Vielzahl von zugeordneten Antennen gebildet wird, wobei die Matrix in ein Gestell oder in Regale, die das eine oder die mehreren Produkte tragen, eingeschlossen ist, wobei das Gestell oder die Regale eine Vielzahl von Stützelementen enthalten, die eine Vielzahl von Lagerplätzen definieren, wobei jeder Lagerplatz konfiguriert ist, um ein einzelnes Produkt zu lagern, wobei die Antennenmatrix in die Vielzahl von Stützelementen integriert ist.

4. Produktüberwachungssystem nach Anspruch 1, wobei die Vielzahl von Stützelementen eine Vielzahl von im Wesentlichen vertikalen Stützelementen und eine Vielzahl von im Wesentlichen horizontalen Stützelementen einschließt.

5. Produktüberwachungssystem nach Anspruch 4, wobei zur Steuerung des einen oder der mehreren NFC-Leser, um ein oder mehrere NFC-Produktetiketten zu lesen, der Prozessor konfiguriert ist zum:
sequentiellem Steuern verschiedener Abschnitte der Antennenmatrix, um alle Produkte zu lesen, die sich innerhalb einer jeweiligen Stelle der Speichervorrichtung befinden, wobei der Speicher des Steuersystems darin Positionsdaten gespeichert hat, die eine Stelle für jeden verschiedenen Abschnitt der Antennenmatrix angeben;
Empfangen einer Vielzahl von Produktidentifikationsdatenabschnitten als Reaktion auf die sequentielle Steuerung der verschiedenen Abschnitte der Antennenmatrix, wobei die Vielzahl der Produktidentifikationsdatenabschnitte gemeinsam die Identifikationsdaten darstellen; und
Bestimmen einer Position jedes identifizierten Produkts, das in der Speichervorrichtung gespeichert ist, unter Verwendung der Vielzahl von Produktidentifikationsdatenabschnitten und der Positionsdaten.

6. Produktüberwachungssystem nach Anspruch 5, wobei der Prozessor ferner konfiguriert ist zum:
Empfangen einer Produktstandortanfrage über die Kommunikationsvorrichtung; und Übertragen der Position jedes identifizierten Produkts, das in der Speichervorrichtung gespeichert ist, über eine Kommunikationsvorrichtung.

7. Produktüberwachungssystem nach einem der Ansprüche 1 bis 6, wobei der Prozessor ferner konfiguriert ist, um die Bestandsdaten basierend auf dem mindestens einen identifizierten, aus der Speichervorrichtung entnommenen Produkt zu aktualisieren,
ein oder mehrere neue Produkte, die in der Speichervorrichtung gespeichert sind, basierend auf dem Vergleich der Produktidentifikationsdaten mit den Inventardaten zu identifizieren und die im Speicher gespeicherten Inventardaten zu aktualisieren, sodass sie Angaben zu dem einen oder den mehreren neuen Produkten enthalten; oder
den einen oder die mehreren NFC-Leser periodisch zu steuern, um das eine oder die mehreren NFC-Etiketten zu lesen, die mit einem oder mehreren auf der Speichervorrichtung gespeicherten Produkten verbunden sind.

8. Produktüberwachungssystem nach einem der Ansprüche 1 bis 7, wobei der Prozessor nach dem Bestimmen, dass das mindestens eine Produkt aus der Speichervorrichtung entnommen wurde, ferner konfiguriert ist, um über die Kommunikationsschnittstelle eine Mitteilung zu übertragen, die angibt, dass das mindestens eine Produkt aus der Speichervorrichtung entnommen worden ist.

9. System, einschließend:
die Produktüberwachung nach einem der Ansprüche 1 bis 8; und
die Speichervorrichtung, wobei die Speichervorrichtung ein Kühlschrank ist, der eine Tür mit einem elektrisch betätigbaren Schloss aufweist, das in einem verriegelten Zustand, sodass das Öffnen der Tür begrenzt ist, und in einem entriegelten Zustand, sodass das Öffnen der Tür nicht begrenzt ist, betätigt werden kann;
wobei der Prozessor des Steuersystems des Produktüberwachungssystems ferner konfiguriert ist zum:
Empfangen von Benutzeridentifikationsdaten eines Benutzers, der versucht, die Tür des Kühlschranks zu öffnen;
Bestimmen, unter Verwendung von im Speicher gespeicherten Benutzerdaten, ob der Benutzer berechtigt ist, die verschließbare Tür zu öffnen; und
als Reaktion auf das Bestimmen, dass der Benutzer autorisiert ist, Steuern des Schlosses, um vom verriegelten Zustand in den entriegelten Zustand überzugehen, sodass der Benutzer in der Lage ist, die Tür zu öffnen und auf das eine oder die mehreren im Kühlschrank gelagerten Produkte zuzugreifen.

10. System nach Anspruch 9, wobei das eine oder die mehreren Produkte eine oder mehrere Weinflaschen sind.

11. System nach Anspruch 9 oder 10, wobei der Kühlschrank eine Eingabevorrichtung einschließt, um die Benutzeridentifikationsdaten vom Benutzer zu empfangen.

12. System nach Anspruch 9 oder 10, wobei das Steuersystem über die Kommunikationsvorrichtung die Benutzeridentifikationsdaten von einer mobilen Kommunikationsvorrichtung empfängt und die mobile Kommunikationsvorrichtung vorzugsweise einen biometrischen Sensor aufweist, wobei die mobile Kommunikationsvorrichtung konfiguriert ist, um biometrische Daten des Benutzers über den biometrischen Sensor zu erfassen, wobei die Benutzeridentifikationsdaten von der mobilen Kommunikationsvorrichtung basierend auf den biometrischen Daten erzeugt werden.

13. System nach einem der Ansprüche 10 bis 12, wobei der Prozessor ferner konfiguriert ist zum:
Bestimmen, basierend auf den Produktidentifikationsdaten, einen oder mehrere Produkttypen des einen oder der mehreren im Kühlschrank gelagerten Produkte;
Abfragen von Temperaturspeicherdaten, auf die das Steuersystem zugreifen kann, unter Verwendung des Produkttyps des einen oder der mehreren im Kühlschrank gelagerten Produkte, um eine oder mehrere gewünschte Lagertemperaturen des einen oder der mehreren Produkte zu bestimmen, wobei die Produktspeichertemperaturdaten eine Vielzahl von gewünschten Temperaturen für eine Vielzahl von Produkttypen angeben; und
Steuern einer Betriebstemperatur des Kühlschranks oder eines Abschnitts davon nach der einen oder mehreren gewünschten Lagertemperaturen.

14. System nach einem der Ansprüche 10 bis 13, wobei der Prozessor ferner konfiguriert ist zum:
Bestimmen, basierend auf den Produktidentifikationsdaten, einen oder mehrere Produkttypen des einen oder der mehreren im Kühlschrank gelagerten Produkte;
Abfragen von Temperaturausgabedaten, auf die das Steuersystem zugreifen kann, unter Verwendung des einen oder der mehreren Produkttypen des einen oder der mehreren im Kühlschrank gelagerten Produkte, um eine oder mehrere gewünschte Ausgabetemperaturen des einen oder der mehreren Produkte zu bestimmen, wobei die Produktausgabetemperaturdaten eine Vielzahl von gewünschten Ausgabetemperaturen für eine Vielzahl von Produkttypen angeben; und
Steuern einer Betriebstemperatur des Kühlschranks oder eines Abschnitts davon, basierend auf der einen oder mehreren gewünschten Serviertemperaturen.

15. System nach einem der Ansprüche 1 bis 14, wobei das System das Serververarbeitungssystem einschließt, wobei das Serververarbeitungssystem einen Datenspeicher aufweist, in dem Profildaten gespeichert sind, wobei das Serververarbeitungssystem konfiguriert ist, um basierend auf den Profildaten und den Bestelldaten das mindestens eine neue Produkt zu bestimmen, vorzugsweise modifiziert das Serververarbeitungssystem die Profildaten basierend auf den Bestelldaten.

## Revendications

1. Système de surveillance de produits comprenant :
au moins un lecteur de communication en champ proche (NFC) associé à un dispositif de stockage ; et
un système de commande comprenant un processeur, une mémoire et une interface de communication, le système de commande étant en communication avec chaque lecteur NFC,
dans lequel la mémoire contient des instructions exécutables, dans lequel le processeur est configuré, sans intervention humaine et par l'exécution des instructions exécutables, pour :
commander chaque lecteur NFC pour lire une ou plusieurs étiquettes NFC associées à un ou plusieurs produits stockés par le dispositif de stockage ;
recevoir, de chaque lecteur NFC, des données d'identification de produit identifiant les un ou plusieurs produits stockés par le dispositif de stockage ;
comparer les données d'identification de produit aux données d'inventaire stockées en mémoire, afin de déterminer au moins un produit qui a été retiré du dispositif de stockage, dans lequel les données d'inventaire indiquent un inventaire déterminé le plus récemment du dispositif de stockage ; et
transférer, via l'interface de communication, les données de commande à un système de traitement de serveur pour commander l'au moins un nouveau produit en remplacement de l'au moins un produit qui a été retiré du dispositif de stockage ;
dans lequel le système de commande comprend un dispositif de commande principal en communication avec chaque lecteur NFC, un commutateur d'antenne et au moins un réseau d'antennes de sorte que chaque antenne soit sélectivement accordable ;
une pluralité d'emplacements de produits, chacun ayant un capteur de produit associé, de sorte que chaque antenne soit associée à une pluralité d'emplacements de produits, de sorte qu'en réponse à la détection par un capteur de produit de l'insertion ou du retrait d'un produit d'un emplacement de produit, toutes les antennes non associées à cet emplacement de produit sont désaccordées ou désactivées, de sorte que l'antenne associée enregistre les détails du produit à partir de l'étiquette qui lui est associée, moyennant quoi les données d'identification de produit représentent collectivement les données d'identification qui sont comparées par le processeur aux données d'inventaire pour déterminer l'au moins un produit qui a été retiré du dispositif de stockage.

2. Système de surveillance de produits selon la revendication 1, comprenant au moins un dispositif de commande secondaire en communication avec le dispositif de commande principal et commandé par celui-ci, chaque dispositif de commande secondaire étant configuré pour commander une pluralité d'antennes et de capteurs de bouteilles qui y sont associés.

3. Système de surveillance de produits selon la revendication 1 ou 2, dans lequel une matrice d'antennes formée d'une pluralité d'antennes associées, la matrice étant intégrée à un rack ou à des étagères supportant les un ou plusieurs produits, dans lequel le rack ou les étagères comprennent une pluralité d'éléments de support définissant une pluralité d'emplacements de stockage, chaque emplacement de stockage étant configuré pour stocker un seul produit, dans lequel la matrice d'antennes est intégrée à la pluralité d'éléments de support.

4. Système de surveillance de produits selon la revendication 1, dans lequel la pluralité d'éléments de support comprend une pluralité d'éléments de support sensiblement verticaux et une pluralité d'éléments de support sensiblement horizontaux.

5. Système de surveillance de produits selon la revendication 4, dans lequel, pour commander les un ou plusieurs lecteurs NFC afin de lire une ou plusieurs étiquettes de produits NFC, le processeur est configuré pour :
commander séquentiellement différentes parties de la matrice d'antennes pour lire tous les produits situés dans un emplacement respectif du dispositif de stockage, dans lequel la mémoire du système de commande contient des données de position indiquant un emplacement pour chaque partie différente de la matrice d'antennes ;
recevoir une pluralité de parties de données d'identification de produit en réponse à la commande séquentielle des différentes parties de la matrice d'antennes, dans lequel la pluralité des parties de données d'identification de produit représente collectivement les données d'identification ; et
déterminer, à l'aide de la pluralité de parties de données d'identification de produit et des données de position, la position de chaque produit identifié stocké dans le dispositif de stockage.

6. Système de surveillance de produits selon la revendication 5, dans lequel le processeur est en outre configuré pour :
recevoir, via l'interface de communication, une demande d'emplacement de produit ; et transférer, via une interface de communication, la position de chaque produit identifié stocké dans le dispositif de stockage.

7. Système de surveillance de produits selon l'une quelconque des revendications 1 à 6, dans lequel le processeur est en outre configuré pour mettre à jour les données d'inventaire sur la base de l'au moins un produit identifié retiré du dispositif de stockage,
identifier un ou plusieurs nouveaux produits stockés dans le dispositif de stockage sur la base de la comparaison des données d'identification de produit avec les données d'inventaire, et mettre à jour les données d'inventaire stockées en mémoire pour qu'elles indiquent les un ou plusieurs nouveaux produits ; ou
commander périodiquement les un ou plusieurs lecteurs NFC pour lire les une ou plusieurs étiquettes NFC associées à un ou plusieurs produits stockés par le dispositif de stockage.

8. Système de surveillance de produits selon l'une quelconque des revendications 1 à 7, dans lequel, en réponse à la détermination du retrait de l'au moins un produit du dispositif de stockage, le processeur est en outre configuré pour transférer, via l'interface de communication, une notification indiquant que le retrait de l'au moins un produit du dispositif de stockage a été effectué.

9. Système comprenant :
la surveillance de produits selon l'une quelconque des revendications 1 à 8 ; et
le dispositif de stockage, dans lequel le dispositif de stockage est un réfrigérateur comprenant une porte ayant une serrure à commande électrique pouvant être verrouillée, de sorte que la porte ne puisse pas être ouverte, et pouvant être déverrouillée, de sorte que la porte puisse être ouverte librement ;
dans lequel le processeur du système de commande du système de surveillance de produits est en outre configuré pour :
recevoir les données d'identification d'utilisateur d'un utilisateur tentant d'ouvrir la porte du réfrigérateur ;
déterminer, à l'aide des données utilisateur stockées en mémoire, si l'utilisateur est autorisé à ouvrir la porte verrouillable ; et
en réponse à la détermination de l'autorisation accordée à l'utilisateur, la commande de la transition de la serrure de l'état verrouillé à l'état déverrouillé de sorte que l'utilisateur puisse ouvrir la porte et accéder aux un ou plusieurs produits stockés dans le réfrigérateur.

10. Système selon la revendication 9, dans lequel les un ou plusieurs produits sont une ou plusieurs bouteilles de vin.

11. Système selon la revendication 9 ou 10, dans lequel le réfrigérateur comprend un dispositif d'entrée pour recevoir les données d'identification d'utilisateur à partir de l'utilisateur.

12. Système selon la revendication 9 ou 10, dans lequel le système de commande reçoit, via le dispositif de communication, les données d'identification d'utilisateur à partir d'un dispositif de communication mobile, et de préférence le dispositif de communication mobile a un capteur biométrique, dans lequel le dispositif de communication mobile est configuré pour capturer les données biométriques de l'utilisateur via le capteur biométrique, dans lequel les données d'identification d'utilisateur sont générées par le dispositif de communication mobile sur la base des données biométriques.

13. Système selon l'une quelconque des revendications 10 à 12, dans lequel le processeur est en outre configuré pour :
déterminer, sur la base des données d'identification de produit, un ou plusieurs types de produits parmi les un ou plusieurs produits stockés dans le réfrigérateur ;
interroger les données de stockage de température accessibles au système de commande, à l'aide du type de produit des un ou plusieurs produits stockés dans le réfrigérateur, afin de déterminer une ou plusieurs températures de stockage souhaitées pour les un ou plusieurs produits, dans lequel les données de température de stockage de produit indiquent une pluralité de températures souhaitées pour une pluralité de types de produits ; et
commander une température de fonctionnement du réfrigérateur, ou d'une partie de celui-ci, selon les une ou de plusieurs températures de stockage souhaitées.

14. Système selon l'une quelconque des revendications 10 à 13, dans lequel le processeur est en outre configuré pour :
déterminer, sur la base des données d'identification de produit, un ou plusieurs types de produits parmi les un ou plusieurs produits stockés dans le réfrigérateur ;
interroger les données de service de température accessibles au système de commande, à l'aide des un ou plusieurs types de produits parmi les un ou plusieurs produits stockés dans le réfrigérateur, afin de déterminer une ou plusieurs températures de service souhaitées pour les un ou plusieurs produits, dans lequel les données de température de service de produit indiquent une pluralité de températures de service souhaitées pour une pluralité de types de produits ; et
commander une température de fonctionnement du réfrigérateur, ou une partie de celui-ci, sur la base des une ou plusieurs températures de service souhaitées.

15. Système selon l'une quelconque des revendications 1 à 14, dans lequel le système comprend le système de traitement de serveur, dans lequel le système de traitement de serveur comprend un référentiel de données contenant des données de profil, dans lequel le système de traitement de serveur est configuré pour déterminer, sur la base des données de profil et des données de commande, l'au moins un nouveau produit, de préférence le système de traitement de serveur modifie les données de profil sur la base des données de commande.
